# EUROPÄISCHE PATENTANMELDUNG

(11) **EP 3 100 782 A1**
(43) Veröffentlichungstag der Anmeldung: **07.12.2016**
(21) Anmeldenummer: 15170321.2
(22) Anmeldetag: 02.06.2015
(51) Int. Cl.: B01D 63/02, B01D 65/00, B01D 63/06

(54) **FILTERMODUL MIT HOHLZYLINDERFÖRMIGEM GEHÄUSE**

(71) Anmelder: 3M Innovative Properties Company, St. Paul, MN 55133-3427 (US)
(72) Erfinder: Riesop, Peter, 45525 HATTINGEN (DE)
(74) Vertreter: CPW GmbH

(57) **Zusammenfassung**

Hohlzylinderförmiges Gehäuse für einen Filtermodul mit einer axialen Erstreckung, einer Wand und entlang der axialen Erstreckung einem ersten Endbereich und einem zweiten Endbereich, wobei die Wand eine Außenseite und eine Innenseite aufweist. Das Gehäuse ist dadurch gekennzeichnet, dass die Wand in ihrer Innenseite mindestens eine nach innen gerichtete erste Wulst aufweist, die im ersten Endbereich angeordnet ist.

Filtermodul, umfassend ein solches hohlzylinderförmiges Gehäuse, wobei im Gehäuse Hohlfaser- oder Rohrmembranen angeordnet sind, die sich in der axialen Richtung des Gehäuses erstrecken und zumindest an ihren dem ersten Endbereich des Gehäuses zugewandten ersten Ende in eine erste Vergussmasse fluiddicht gegenüber der Innenseite der Wand eingebettet sind und wobei die mindestens eine erste Wulst sich im Bereich der ersten Vergussmasse befindet.

## Beschreibung

Die Erfindung betrifft ein hohlzylinderförmiges Gehäuse für einen Filtermodul sowie einen Filtermodul mit einem hohlzylinderförmigen Gehäuse, enthaltend Hohlfaser- oder Rohrmembranen.

Für verschiedenste Einsatzzwecke zur Abtrennung einzelner Komponenten aus einer Flüssigkeit oder zur Hinzufügung solcher Komponenten zu Flüssigkeiten werden Membran- oder Filtermodule auf Basis von Rohr- oder Hohlfasermembranen eingesetzt. Diese Rohr- bzw. Kapillarmembranen weisen in der Regel eine semipermeable Wand mit einer porösen Struktur auf, über die die betreffende Komponente in die Flüssigkeit hinein bzw. aus der Flüssigkeit heraus permeiert. So ermöglichen beispielsweise Mikrofiltrationsmembranen die Entfernung feiner Teilchen oder Mikroorganismen mit Größen bis in den Submikronbereich und sind daher für die Herstellung von gereinigtem Wasser für die Verwendung in Laboratorien oder für die Halbleiterindustrie geeignet. Zahlreiche weitere Anwendungen von Membrantrennprozessen sind aus der Getränkeindustrie, der Biotechnologie oder der Abwassertechnologie bekannt.

In zunehmendem Maße werden Membranen auch zur Membrandestillation eingesetzt. Die Membrandestillation ist eine Kombination aus einer konventionellen thermischen Destillation und einer Membranfiltration. Eine weite Verbreitung haben Kapillarmembranmodule inzwischen auch bei Anwendungen im Bereich der Be- und Entgasung von Flüssigkeiten oder der Gastrennung gefunden.

In den Filtermodulen sind die Hohlfaser- bzw. Rohrmembranen zumeist in als Hohlzylinder ausgebildete Gehäuse eingebracht, wobei die Membranen in Richtung der axialen Erstreckung bzw. der Längserstreckung der hohlzylinderförmigen Gehäuse angeordnet sind. Die Rohr- bzw. Hohlfasermembranen sind dabei zu einem oder mehreren Bündeln zusammengefasst.

Die in axialer Richtung in den Filtermodulen bzw. im hohlzylinderförmigen Gehäuse angeordneten Hohlfaser- bzw. Rohrmembranen sind an einem oder an beiden ihrer Enden in mit der Gehäuseinnenwand verbundene Vergussmassen fluiddicht eingebettet. Im Falle, dass beide Enden in Vergussmassen eingebettet sind, wird um die Hohlfaser- bzw. Rohrmembranen herum ein von den Vergussmassen sowie der Gehäuseinnenwand begrenzter Außenraum ausgebildet, der durch die Vergussmassen von den mit den Lumina der die Hohlfaser- bzw. Rohrmembranen in Fluidverbindung stehenden Ein- bzw. Ausströmbereichen fluiddicht getrennt ist. Zumindest an einem Ende treten die gemeinsam eingebetteten Membranen durch die sie umschließende Vergussmasse hindurch und sind an diesem Ende offen, so dass die Lumina der die Hohlfaser- bzw. Rohrmembranen von einem Fluid anströmbar sind. Die Hohlfaser- bzw. Rohrmembranen können auch an beiden ihrer Enden durch die jeweilige Vergussmasse hindurchtreten und an beiden Enden geöffnet sein, so dass ein Fluid durch die Lumina hindurch strömen kann.

Für die Vergussmassen werden duroplastische Harze wie z.B. Polyurethane oder Epoxidharze, oder auch thermoplastische Harze eingesetzt. Dabei werden die zunächst flüssigen bzw. schmelzeflüssigen Harze in einem Zentrifugalverfahren, im Standguss oder durch Injektion zwischen die Hohlfaser- bzw. Rohrmembranen und die Gehäuseinnenwand gebracht und durch Aushärungsreaktion bzw. Temperaturabkühlung in den festen Zustand überführt. Dabei entsteht eine fluiddichte Verbindung zwischen Vergussmasse, Hohlfaser- bzw. Rohrmembranen und Gehäuseinnenwand. Beispiele für derartige Membranfilter sind vielfach im Stand der Technik offenbart (s. z.B. EP-A-1 160 002, EP-A-1 270 063, US-A-4 940 617, US-A-5 383 448, US-A-5 938 922).

Vielfach werden solche Membranfilter in Anwendungen eingesetzt, bei denen durch die Anströmung der Hohlfaser- bzw. Rohrmembranen von ihrem einen Ende her durch z.B. eine Flüssigkeit ein hoher axialer Druck auf das Membranbündel bzw. auf die angeströmte Vergussmasse ausgeübt wird. Hierdurch kann es zu einem Lösen der Verbindung zwischen Vergussmasse und Gehäuseinnenwand kommen, was Undichtigkeiten und axiale Verschiebungen der Membranen zur Folge haben kann.

Alternativ werden daher Membranfilter vorgeschlagen, bei denen z.B. eine vorgefertigte Kartusche mit an ihren Enden eingebetteten Hohlfasermembranen in ein zylinderförmiges Gehäuse eingeschoben ist und im Bereich der Vergussmassen z.B. über O-Ringe eine Abdichtung zur Gehäuseinnenwand erfolgt. Derartige Module, bei denen zusätzlich eine Stabilisierung in axialer Richtung über Sicherungsringe wie z.B. Seegeringe bewirkt wird, wird z.B. in der EP-A-0 307 047 offenbart. Auch die US-A-6 207 053 offenbart Filtermodule, bei denen zusätzliche Dichtungsringe im Bereich der Enden der Vergussmassen eingebracht sind. Darüber hinaus sorgen angeschweißte Endkappen, deren Innendurchmesser in den Bereich der Vergussmasse hineinragt, für eine Stabilisierung in axialer Richtung. Eine solche konstruktive Maßnahme wird auch in der EP-A-2 659 951 offenbart.

Die angebotenen Lösungen sind jedoch oftmals unbefriedigend, da beispielsweise zusätzliche Bauteile benötigt werden und eine komplexere Bauart der Membranfilter resultiert oder eine spezielle Anpassung z.B. von Endkappen erforderlich ist, wodurch die Variabilität bei der Herstellung der Filtermodule eingeschränkt wird.

Es ist daher Aufgabe der vorliegenden Erfindung, einen Filtermodul und Bauteile für Filtermodule zur Verfügung zu stellen, bei denen in der Anwendung eine hohe Dichtigkeit zwischen Vergussmassen in Gehäuseinnenwand und damit eine sichere Abtrennung der Ein- bzw. Ausströmbereiche des Filtermoduls von dem die Rohr- bzw. Hohlfasermembranen umgebenden Außenraum ermöglicht wird.

Die erfindungsgemäße Aufgabe wird gelöst durch ein hohlzylinderförmiges Gehäuse für einen Filtermodul mit einer axialen Erstreckung, einer Wand und entlang der axialen Erstreckung einem ersten Endbereich und einem zweiten Endbereich, wobei die Wand eine Außenseite und eine Innenseite aufweist, dadurch gekennzeichnet, dass die Wand in ihrer Innenseite mindestens eine nach innen gerichtete erste Wulst aufweist, die im ersten Endbereich angeordnet ist.

Die erfindungsgemäße Aufgabe wird des Weiteren gelöst durch einen Filtermodul, umfassend ein solches hohlzylinderförmiges Gehäuse, wobei im Gehäuse Hohlfaser- oder Rohrmembranen angeordnet sind, die sich in der axialen Richtung des Gehäuses erstrecken und zumindest an ihren dem ersten Endbereich des hohlzylinderförmigen Gehäuses zugewandten ersten Ende in eine erste Vergussmasse fluiddicht gegenüber der Innenseite der Wand eingebettet sind, wobei die mindestens eine erste Wulst sich im Bereich der ersten Vergussmasse befindet.

Ausführungsformen des Filtermoduls, bei denen die Hohlfaser- bzw. Rohrmembranen nur an ihren dem ersten Endbereich des hohlzylinderförmigen Gehäuses zugewandten ersten Ende in eine erste Einbettung fluiddicht gegenüber der Innenseite der Wand eingebettet sind, lassen sich z.B. für sogenannte Dead-End Filtrationen einsetzen, bei denen das zu filtrierende Medium vom ersten, offenen Ende der Hohlfaser- bzw. Rohrmembranen in deren Lumina einströmt und - bis auf die zurückzuhaltenden Bestandteile des Mediums - über die Wand der Membranen aus diesen austritt. In diesen Fällen ist das zweite Ende der Hohlfaser- bzw. Rohrmembranen geschlossen. In einer Ausführungsform können die zweiten Enden der Hohlfaser- bzw. Rohrmembranen ebenfalls in eine Vergussmasse eingebettet sein, wobei der Verschluss der eingebetteten Enden auch durch die Vergussmasse bewirkt sein kann.

In einer weiteren Ausführungsform sind die Hohlfaser- bzw. Rohrmembranen an ihren beiden Enden offen und an ihrem ersten Ende in eine erste Vergussmasse und an ihrem zweiten Ende in eine zweite Vergussmasse eingebettet, die sich im Bereich des zweiten Gehäuseendes befindet. In diesen Fällen sind die Lumina der Hohlfaser- bzw. Rohrmembranen von einem Fluid durchströmbar. Über die Wände der Hohlfaser- bzw. Rohrmembranen findet dann, je nach Anwendungsfall, eine Filtration oder beispielsweise eine Zu-oder Abführung bestimmter Komponenten in bzw. aus dem die Lumina durchströmenden Fluid statt.

Insbesondere für Ausführungsformen, bei denen die Hohlfaser- bzw. Rohrmembranen an ihren beiden Enden in eine Vergussmasse eingebettet sind, ist es von Vorteil, wenn die Wand des hohlzylinderförmigen Gehäuses neben der mindestens einen ersten Wulst im ersten Endbereich des Weiteren des weiteren mindestens eine nach innen gerichtete zweite Wulst aufweist, die im zweiten Endbereich angeordnet ist. Bei Filtermodulen mit einem solchen hohlzylinderförmigen Gehäuse befindet sich vorzugsweise im Bereich beider Einbettungen mindestens eine Wulst. Bei eine bevorzugten Ausfühungsform des Filtermoduls sind daher die Hohlfaser- oder Rohrmembranen auch an ihren dem zweiten Endbereich des hohlzylinderförmigen Gehäuses zugewandten zweiten Ende in eine zweite Vergussmasse fluiddicht gegenüber der Innenseite der Wand eingebettet sind, wobei sich im Bereich der zweiten Vergussmasse mindestens eine zweite Wulst befindet.

Wie ausgeführt liegen die mindestens eine erste bzw. die mindesten eine zweite Wulst im Filtermodul im Bereich der Vergussmassen bzw. Einbettungen. In einer Ausführungsform kann dabei die jeweilige Vergussmasse durch eine erste bzw. zweite Wulst begrenzt sein, so dass auf diese Weise eine Stabilisierung gegenüber axialen Beanspruchungen oder Verschiebungen erreicht wird. Hierzu liegt die jeweilige Wulst in Richtung der axialen Beanspruchung entlang der Erstreckung des Gehäuses vorzugsweise hinter der Vergussmasse. Gemäß einer bevorzugten Ausführungsform liegt im Filtermodul mindestens eine erste bzw. mindestens eine zweite Wulst jedoch innerhalb der ersten bzw. zweiten Vergussmasse und wird von dieser umschlossen.

Die mindestens eine erste bzw. die mindesten eine zweite Wulst kann beispielsweise auf die Innenseite der Gehäusewand aufgeklebt oder auch aufgeschweißt sein. Vorzugsweise ist die mindestens eine erste bzw. die mindestens eine zweite Wulst jedoch integraler Bestandteil der Wand des zylinderförmigen Gehäuses und beispielsweise bei der Formgebung des zylinderförmigen Gehäuses ausgebildet worden. In einer bevorzugten Ausführungsform ist zur Ausbildung der ersten bzw. zweiten Wulst auf der Außenseite der Gehäusewand eine umlaufende Nut beispielsweise in Form einer Rollnut in die Wand eingepresst, wodurch es auf der der Nut gegenüberliegenden Seite der Wand zu einer Auswölbung und zur Ausbildung der Wulst kommt. In einer bevorzugten Ausführungsform weist daher die Wand des Gehäuses bzw. die Wand des vom Filtermodul umfassten Gehäuses auf ihrer Außenseite an der der mindestens einen ersten bzw. der mindestens einen zweiten Wulst gegenüberliegenden Stelle eine Nut auf. Derartige Nuten sind gleichzeitig zu Befestigungszwecken einsetzbar, beispielsweise zur Befestigung von Endkappen an den Enden des Gehäuses z.B. mittels Victaulic-Verbindungen.

Die mindestens eine erste und/oder mindestens eine zweite Wulst lässt sich bei einem hohlzylinderförmigen, aus einem plastisch verformbaren Material bestehenden Gehäuse mit einem kreisförmigen Querschnitt dadurch herstellen, dass mit einer Nutrolle eine Nut in die Außenseite des Gehäuses eingepresst wird, während das Gehäuse um seine Längsachse rotiert. Während des Einpressvorgangs drückt in dem Bereich, in dem die Außennut eingepresst wird, als Gegenrolle eine Antriebsrolle gegen die Innenseite des Gehäuses, wobei die Antriebsrolle eine Gegennut aufweist, die auf die Breite der Außennut abgestimmt ist. Die Antriebsrolle mit der Gegennut wird so positioniert, dass die Gegennut der Antriebsrolle der Nutrolle gegenüberliegt. Hierdurch kommt es zur Ausbildung einer Wulst auf der Innenseite der Gehäusewand an der Stelle, an der von außen eine Nut in die Außenseite eingeprägt wird.

In ihren Andruckbereichen rechts und links der Gegennut weist die Antriebsrolle vorzugsweise eine Prägung auf. Hierdurch kann ein sicherer Antrieb des Gehäuses, d.h. eine sichere Rotation des Gehäuses um seine Längsachse erreicht werden. Bei der Ausbildung der Nut und der Wulst kann sich die Prägung in die Innenseite der Gehäusewand eindrücken, so dass das Gehäuse in diesen Bereichen umlaufende Zonen mit einer Prägung aufweist. Diese umlaufenden Zonen mit einer Prägung führen bei Filtermodulen, die solche Gehäuse mit umlaufenden geprägten Zonen aufweisen, zu einer verbesserten Verankerung der Vergussmassen und damit zu einer erhöhten Stabilität und Dichtigkeit bei axialer Beanspruchung.

In einer bevorzugten Ausführungsform weist daher das Gehäuse seitlich der mindestens einen ersten und/oder zweiten Wulst in der Gehäuseinnenseite umlaufende Zonen mit Einprägungen auf, die beispielsweise die Form von zylinder-, pyramiden- , kegel- oder wellenförmigen Vertiefungen haben können.

Es ist von Vorteil, wenn das hohlzylinderförmige Gehäuse aus einem plastisch verformbaren Material besteht. Dies ermöglicht auf einfache Weise insbesondere die Ausbildung der mindestens einen ersten bzw. zweiten Wulst beispielsweise durch Einprägen einer Rollnut in die Gehäusewand. Vorzugsweise besteht das hohlzylinderförmige Gehäuse aus einem metallischen oder aus einem thermoplastischen Werkstoff. Besonders bevorzugt besteht das Gehäuse aus einem thermoplastischen Werkstoff, ausgewählt aus der Gruppe der Polyvinylchloride, der Polypropylene oder der Polyethylene. Dabei ist ebenfalls bevorzugt, wenn das Gehäuse einen kreisförmigen Innen- und Außenquerschnitt aufweist.

Die mindestens eine erste bzw. die mindestens eine zweite Wulst liegt in Form einer nach innen gerichteten umlaufenden Auswölbung der Innenwand vorzugsweise mit gerundeter Querschnittskontur vor. Bevorzugt weist die mindestens eine erste bzw. die mindestens eine zweite Wulst eine Breite in axialer Erstreckung des Gehäuses im Bereich von 5 bis 50 mm auf. Ebenso ist bevorzugt, wenn sie eine Höhe gegenüber der Innenseite der Wand des Gehäuses von 0,5 bis 5 mm aufweist. Mit derartig ausgebildeten Wülsten kann eine signifikante Verbesserung der Dichtigkeit zwischen Vergussmasse und Gehäuseinnenseite und der axialen Stabilität bei hohen axialen Druckbeanspruchungen im Einsatz des Filtermoduls erreicht werden.

Für eine erhöhte Stabilität im Bereich der Einbettungen kann in einer weiteren Ausführungsform des Gehäuses bzw. des Filtermoduls das Gehäuse in seinen Endbereichen zwei oder mehr nebeneinander liegende erste bzw. zweite Wülste aufweisen.

## Patentansprüche

1. Hohlzylinderförmiges Gehäuse für einen Filtermodul mit einer axialen Erstreckung, einer Wand und entlang der axialen Erstreckung einem ersten Endbereich und einem zweiten Endbereich, wobei die Wand eine Außenseite und eine Innenseite aufweist, **dadurch gekennzeichnet, dass** die Wand in ihrer Innenseite mindestens eine nach innen gerichtete erste Wulst aufweist, die im ersten Endbereich angeordnet ist.

2. Hohlzylinderförmiges Gehäuse nach Anspruch 1, **dadurch gekennzeichnet, dass** die Wand in ihrer Innenseite des weiteren mindestens eine nach innen gerichtete zweite Wulst aufweist, die im zweiten Endbereich angeordnet ist.

3. Hohlzylinderförmiges Gehäuse nach Anspruch 1 oder 2, **dadurch gekennzeichnet**, das die mindestens eine erste bzw. zweite Wulst eine Breite in axialer Erstreckung des Gehäuses im Bereich von 5 bis 50 mm aufweist.

4. Hohlzylinderförmiges Gehäuse nach einem oder mehreren der Ansprüche 1 bis 3, **dadurch gekennzeichnet, dass** die Wand des Gehäuses auf ihrer Außenseite an der der mindestens einen ersten bzw. zweiten Wulst gegenüberliegenden Stelle eine Nut aufweist.

5. Hohlzylinderförmiges Gehäuse nach einem oder mehreren der Ansprüche 1 bis 4, **dadurch gekennzeichnet, dass** das Gehäuse einen kreisförmigen Innen- und Außenquerschnitt aufweist.

6. Hohlzylinderförmiges Gehäuse nach einem oder mehreren der Ansprüche 1 bis 5, **dadurch gekennzeichnet, dass** das Gehäuse aus einem metallischen oder einem thermoplastischen Werkstoff besteht.

7. Filtermodul, umfassend ein hohlzylinderförmiges Gehäuse nach Anspruch 1, wobei im Gehäuse Hohlfaser- oder Rohrmembranen angeordnet sind, die sich in der axialen Richtung des Gehäuses erstrecken und zumindest an ihren dem ersten Endbereich des hohlzylinderförmigen Gehäuses zugewandten ersten Ende in eine erste Vergussmasse fluiddicht gegenüber der Innenseite der Wand eingebettet sind, wobei die mindestens eine erste Wulst sich im Bereich der ersten Vergussmasse befindet.

8. Filtermodul nach Anspruch 7, **dadurch gekennzeichnet, dass** die Hohlfaser- oder Rohrmembranen an ihren dem zweiten Endbereich des hohlzylinderförmigen Gehäuses zugewandten zweiten Ende in eine zweite Vergussmasse fluiddicht gegenüber der Innenseite der Wand eingebettet sind, wobei sich im Bereich der zweiten Vergussmasse mindestens eine zweite Wulst befindet.

9. Filtermodul nach Anspruch 7 oder 8, **dadurch gekennzeichnet, dass** die sich die mindestens eine erste und/oder die mindestens eine zweite Wulst sich innerhalb der jeweiligen Vergussmasse befindet und von der jeweiligen Vergussmasse umschlossen wird.

10. Filtermodul nach einem oder mehreren der Ansprüche 7 bis 9, **dadurch gekennzeichnet, dass** die Wand des Gehäuses auf ihrer Außenseite an der der mindestens einen ersten bzw. zweiten Wulst gegenüberliegenden Stelle eine Nut aufweist.

11. Filtermodul nach einem oder mehreren der Ansprüche 7 bis 10, **dadurch gekennzeichnet, dass** die mindestens eine erste bzw. zweite Wulst eine Breite in axialer Erstreckung des Gehäuses im Bereich von 5 bis 50 mm aufweist.

12. Filtermodul nach einem oder mehreren der Ansprüche 7 bis 11, **dadurch gekennzeichnet, dass** das Gehäuse aus einem metallischen oder einem thermoplastischen Werkstoff besteht.
